# EUROPÄISCHE PATENTSCHRIFT

(11) **EP 2 145 413 B1**
(45) Veröffentlichungstag und Bekanntmachung des Hinweises auf die Patenterteilung: **15.11.2017**
(21) Anmeldenummer: 09703967.1
(22) Anmeldetag: 20.01.2009
(51) Int. Cl.: H04J 14/02, H04J 3/08

(54) **VERFAHREN ZUR PROTECTION EINES PASSIVEN OPTISCHEN ÜBERTRAGUNGSNETZES SOWIE PASSIVES OPTISCHES ÜBERTRAGUNGSNETZ MIT ENTSPRECHENDEM PROTECTION-MECHANISMUS**
METHOD FOR PROTECTING A PASSIVE OPTICAL TRANSMISSION NETWORK AND PASSIVE OPTICAL TRANSMISSION NETWORK HAVING CORRESPONDING PROTECTION MECHANISM
PROCÉDÉ DE PROTECTION D'UN RÉSEAU DE TRANSMISSION OPTIQUE PASSIF ET RÉSEAU DE TRANSMISSION OPTIQUE PASSIF COMPRENANT UN MÉCANISME DE PROTECTION CORRESPONDANT

(30) Priorität: 24.01.2008 DE 102008005942
(43) Veröffentlichungstag der Anmeldung: 20.01.2010
(73) Patentinhaber: ADVA Optical Networking SE, 98617 Meiningen (DE)
(72) Erfinder: GROBE, Klaus, 82152 Planegg (DE)
(74) Vertreter: Eder, Thomas
(86) Internationale Anmeldenummer: PCT/DE2009/000064
(87) Internationale Veröffentlichungsnummer: WO 2009/092356

(56) Entgegenhaltungen:
- EP-A1- 1 863 207
- WO-A-2006/115536
- US-A1- 2005 175 343
- QUELLER, A: "Achieving Fiber Protection of the Access Link from the Core to the User" PROC OF SPIE, Bd. 5970, Nr. 5970028, 2005, XP040210824 PO BOX 10 BELLINGHAM WA 98227-0010 USA
- CHAN C-K ET AL: "A Novel Centrally Controlled Protection Scheme for Traffic Restoration in WDM Passive Optical Networks" IEEE PHOTONICS TECHNOLOGY LETTERS, IEEE SERVICE CENTER, PISCATAWAY, NJ, US, Bd. 17, Nr. 3, 1. März 2005 (2005-03-01), Seiten 717-719, XP011127033 ISSN: 1041-1135
- LANGER K-D ET AL: "Promising evolution paths for passive optical access networks" TRANSPARENT OPTICAL NETWORKS, 2004. PROCEEDINGS OF 2004 6TH INTERNATIO NAL CONFERENCE ON WARSAW, POLAND JULY 4-8, 2004, PISCATAWAY, NJ, USA,IEEE, Bd. 1, 4. Juli 2004 (2004-07-04), Seiten 202-207, XP010743477 ISBN: 978-0-7803-8343-2

## Beschreibung

Die Erfindung betrifft ein Verfahren zur Protection eines passiven optischen Übertragungsnetzes mit den Merkmalen der Oberbegriffe der Patentansprüche 1 bzw. 4, wobei sich diese Verfahren grundsätzlich dadurch unterscheiden, dass im einen Fall ein Remote Node direkt mittels einer optischen Übertragungsstrecke mit einem optischen Line Terminal verbunden ist und im anderen Fall mittels einer ringförmig ausgebildeten Übertragungsstrecke, in welche eine beliebige Anzahl von Remote Nodes geschaltet sein können. Des Weiteren betrifft die Erfindung ein passives optisches Übertragungsnetz mit einem entsprechenden Protection-Mechanismus mit den Merkmalen der Oberbegriffe der Patentansprüche 7 und 12, wobei sich auch diese Varianten von optischen Übertragungsnetzen dadurch unterscheiden, dass im einen Fall eine direkte bzw. sternförmige Anbindung eines oder mehrerer Remote Nodes an ein optisches Line Terminal besteht und im anderen Fall eine Anbindung mittels einer ringförmigen optischen Übertragungsstrecke.

Die Aufgabe, einen Protection-Mechanismus vorzusehen, stellt sich insbesondere bei Übertragungsstrecken mit großer Übertragungskapazität bzw. hohem Datenaufkommen, also insbesondere bei Fernübertragungsstrecken, da hier üblicherweise eine möglichst hohe Konzentration von Datensignalen gewünscht und gegeben ist. Die Signale werden hierbei im Zeitmultiplex- und/oder Wellenlängenmultiplexverfahren übertragen.

Bei optischen Übertragungsstrecken besteht grundsätzlich die Möglichkeit, zum einen die eigentliche optische Übertragungsstrecke, also den Lichtwellenleiter, zu protecten und/oder die einzelnen Wellenlängenkanäle, wenn eine Übertragung im Wellenlängenmultiplex erfolgt. Im erstgenannten Fall wird der Übertragungspfad redundant vorgesehen (Line Protection) und im letztgenannten Fall das gesamte oder Teile des Übertragungsequipments (Equipment Protection). Selbstverständlich können auch beide Varianten kombiniert werden.

Wird eine Line Protection realisiert, so kann bei einer ringförmigen Verbindung von mehreren Netzknoten im Fall einer Störung der optischen Übertragungsstrecke (beispielsweise bei einem Zerstören des betreffenden Lichtwellenleiters) die Datenübertragung über den jeweils anderen Zweig der Ringstruktur, d. h. in entgegengesetzter Übertragungsrichtung im Ring, erfolgen. Hierzu ist es üblich, das betreffende Signal eines Kanals auf eine Wellenlänge umzusetzen, die in dem betreffenden anderen Ringzweig nicht belegt ist. Hierzu wird üblicherweise ein vollständiges Ersatz-Wellenlängenband mit einer entsprechenden Anzahl von Ersatzkanälen (mit entsprechenden Mittenwellenlängen) bereitgestellt. Dies erfordert jedoch einen entsprechenden schaltungstechnischen und damit finanziellen Aufwand.

In den letzten Jahren wurden auch passive optische Übertragungsnetze für den Einsatz als Zugangsnetz, insbesondere Ortsnetz, entwickelt, bei denen zumindest teilweise die Übertragung auch im Wellenlängenmultiplexverfahren erfolgt. Diese Netze dienen zur direkten optischen Anbindung einer Vielzahl von Teilnehmern, sogenannter Optical Network Units (ONU) an ein optisches Line Terminal (OLT). Die Anbindung der Vielzahl von ONU's erfolgt dabei durch eine Verbindung der einzelnen ONU's mit mindestens einem Remote Node (RN), wobei die Datenübertragung zwischen einem ONU und dem RN üblicherweise mittels eines einzigen optischen Lichtwellenleiters erfolgt, der bidirektional betrieben wird. Meist wird zwischen einem ONU und einem RN auch nur jeweils ein Wellenlängenkanal (bidirektional) vorgesehen, wobei selbstverständlich auch die Verwendung mehrerer Wellenlängenkanäle möglich wäre. Selbstverständlich kann an Stelle eines einzigen optischen Lichtwellenleiters, der bidirektional betrieben wird, für die Anbindung eines ONU an einen RN auch eine aus zwei jeweils unidirektional betriebenen Lichtwellenleitern bestehende optische Übertragungsstrecke verwendet werden. In beiden Fällen können für die beiden Übertragungsrichtungen Wellenlängenkanäle mit identischer oder untschiedlicher Mittenwellenlänge verwendet werden.

Im RN werden die Signale der einzelnen Wellenlängenkanäle der angebundenen ONU's zu einem Wellenlängenmultiplexsignal zusammengefasst, wobei dieses Wellenlängenmultiplexsignal über eine optische Übertragungsstrecke an das OLT übertragen wird. Im OLT wird das empfangene Wellenlängenmultiplexsignal gedemultiplext. Die Signale der gedemultiplexten Wellenlängenkanäle werden jeweils einer Empfangseinheit zugeführt. In gleicher Weise wird im OLT ein an den betreffenden RN zu übertragendes Wellenlängenmultiplexsignal durch das Multiplexen von Signalen der Wellenlängenkanäle einer entsprechenden Anzahl von Sendeinheiten erzeugt. Nach dem Übertragen dieses Wellenlängenmultiplexsignals an den betreffenden RN wird dieses Wellenlängenmultiplexsignal im RN gedemultiplext. Die Signale der einzelnen Wellenlängenkanäle werden den jeweiligen ONU's zugeführt.

Die Länge der optischen Übertragungsstrecke zwischen einem ONU und einem RN beträgt typischerweise bis zu einigen Kilometern oder einigen zehn Kilometern. Die Länge der optischen Übertragungsstrecke zwischen dem OLT und einem RN beträgt ebenfalls typischerweise einige Kilometer bis einige zehn Kilometer.

Wie bereits vorstehend erläutert, kann die Anbindung der RN an ein OLT bei einem passiven optischen Übertragungsnetz sowohl sternförmig als auch in Form einer Ringstruktur erfolgen, wobei die jeweiligen Übertragungsstrecken als optische Übertragungsstrecken ausgebildet sind. Da die genutzte Übertragungskapazität der optischen Übertragungsstrecke zwischen einem RN und dem OLT um ein Vielfaches höher ist als die genutzte Übertragungskapazität der Übertragungsstrecken zwischen einem ONU und dem betreffenden RN, ist es technisch und wirtschaftlich sinnvoll, auch bei passiven optischen Übertragungsnetzen, bei denen die optischen Übertragungsstrecken im Vergleich zu Fernübertragungsstrecken relativ kurz sind, einen Protection-Mechanismus zwischen dem einen oder mehreren RN und dem OLT zu realisieren.

Die Entwicklung von passiven optischen WDM-Netzwerken mit Protection-Mechanismus steht noch am Anfang. Ziel entsprechender Entwicklungen muss es sein, die RN trotz eines realisierten Line Protection-Mechanismus noch ausschließlich mit passiven optischen Elementen bzw. Einheiten zu realisieren, insbesondere um den Wartungsaufwand zu minimieren.

Hierzu ist aus OECC proceedings, 2006, Bo-Zhang, Chun-Kit Chan, Chinlon Lin, "a survivable WDM passive optical network with coloriess optical network units" ein passives optisches Netzwerk bekannt, bei dem auch ein Protection-Mechanismus realisiert ist. Bei diesem passiven optischen Netzwerk wird jeder RN über eine aus vier jeweils unidirektional betriebenen Lichtwellenleitern gebildete optische Übertragungsstrecke mit dem OLT verbunden. Im normalen Betriebszustand werden zwei der Lichtwellenleiter jeweils für eine Übertragungsrichtung benutzt. Im Fall einer Unterbrechung eines dieser Lichtwellenleiter wird im OLT mittels eines optischen Schalters auf einen Protection-Lichtwellenleiter umgeschaltet, der dann zur Übertragung eines Wellenlängenmultiplexsignals vom OLT zum RN dient. In diesem Störungsfall werden nach einem speziellen Verfahren auch die Wellenlängen der benutzten Übertragungskanäle umgeschaltet. Gleichzeitig wird auch für die Übertragung vom RN zum OLT ein weiterer Protection-Lichtwellenleiter verwendet. Dabei wird zur Realisierung des speziellen Verfahrens zur Auswahl von Working-Wellenlängen und Protection-Wellenlängen bzw. zum Umschalten zwischen diesen Wellenlängen die Periodizität eines AWG (Arrayed Waveguide Grating) ausgenutzt.

Nachteilig bei diesem passiven optischen Übertragungsnetz ist der Aufwand für das Bereitstellen der Protection-Wellenlängenkanäle und der Aufwand zur Realisierung des Umschaltens zwischen den Working- und Protection-Wellenlängenkanälen.

Aus Queller, A, "Achieving Fiber Protection of the Access Link from the Core to the Customore", PROC OF SPIE, Bd. 5970, Nr. 5970028, 2005, XP020210824, PO Box 10 Bellingham WA 98227-0010 USA sind verschiedene Topologien für eine 1+1 und eine 1:1 Protection bekannt. Dabei wird eine 1+1 Protection für unidirectional betriebene optische Pfade für die Upstream und Downstreamübertragung dadurch ermöglicht, dass jeweils zwei weitere unidirektionale Pfade für die Protection hinzugefügt werden und jeweils auf der Sendeseite ein optischer Koppler verwendet wird, mit dem das Sendesignal gesplittet und jeweils sowohl dem Working Pfad als auch dem Protection Pfad in der betreffenden Übertragungsrichtung zugeführt wird. Dies bedingt jedoch auf beiden Seiten der Übertragungsstrecken jeweils einen optischen Schalter, der eine entsprechende Ansteuerung erfordert. Im Fall einer 1:1 Protection wird nach dieser Veröffentlichung auf beiden Seiten der Übertragungsstrecken ein optischer Schalter verwendet, so dass der Nachteil einer aktiven Ansteuerung des Schalters auch hier auf beiden Seiten gegeben ist. Für einen jeweils bidirektional betriebenen optischen Working- und Protection Pfad wird in dieser Veröffentlichung nur eine 1:1 Protection vorgeschlagen, d.h. auf beiden Seiten der Übertragungsstrecken wird jeweils ein optischer Schalter eingesetzt, mit denen das Sendesignal jeweils entweder dem Working Pfad oder dem Protection Pfad zugeführt wird. Auch hier ist auf beiden Seiten eine aktive Ansteuerung des betreffenden optischen Schalters erforderlich.

Aus Chan C-K et al, "A Novel Centrally Controlled Protection Schemefor Traffic Restoration in WDM Passive Optical Networks", IEEE PHOTONICS TECHNOLOGY LETTERS, IEEE Service Center, Piscataway,NJ, US, Bd. 17, Nr. 3, 1. März 2005, Seiten 717-719, XP011127033, ISSN: 1041-1135 ist ein Proctection Verfahren für die Übetragungsstrecke zwischen einem Remote Node (RN) und den daran angeschlossenen Optical Node Units (ONUs) bekannt, wobei immer jeweils mehrere ONUs, insbesondere jeweils zwei ONUs sowohl untereinander als auch mit dem RN mittels verbunden sind. Die Verbindung untereinander erfolgt mittels jeweils zweier optischer Pfade. Durch eine spezielle Wahl der optischen Bänder für die Upstream- und Downstream-Übertragung kann selbst bei Ausfall eines optischen Pfades zwischen einem ONU und dem betreffenden RN die volle Funktionalität aufrechterhalten werden, indem der optische Pfad zwischen dem jeweils anderen der beiden gekoppelten ONUs und die beiden Pfade zwischen den gekoppelten ONUs für die Signalübertragung genutzt werden. Dies erfordert jedoch eine spezielle Wahl der optischen Bänder für die zu übertragenden Kanalsignale, welche auf der Übertragungsstrecke zwischen einem Optischen Line Terminal (OLT) und dem RN zu einem WDM-Übertragungssignal zusammengefasst sind.

Aus EP1863207A1 ist es in einem Protection-Verfahren bekannt, die Datenrichtungen mittels Filter von einander zu trennen. Der Erfindung liegt daher die Aufgabe zu Grunde, ein passives opitsches Übertragungsnetz mit Protection-Mechanismus zu schaffen, welches zumindest eine Line Protection der Übertragung zwischen dem wenigstens einen RN und dem OLT gewährleistet und welches auf einfache Weise realisierbar ist. Des Weiteren liegt der Erfindung die Aufgabe zu Grunde, ein passives optisches Übertragungsnetz mit Protection-Mechanismus zu schaffen, bei dem dieses Verfahren realisiert ist.

Die Erfindung löst diese Aufgabe mit den Merkmalen der Patentansprüche 1 und 4 bzw. 7 und 12.

Die Erfindung geht von der Erkenntnis aus, dass ein Protection-Mechanismus für die Übertragungsstrecke zwischen dem OLT und einem RN in vorteilhafter Weise dadurch realisiert werden kann, dass im RN das an das OLT zu übertragende Wellenlängenmultiplexsignal sowohl einem Working-Pfad als auch einem Protection-Pfad zugeführt wird. Der RN wird somit mittels einer zweiten optischen Übertragungsstrecke an das OLT angebunden, welche ebenfalls bidirektional ausgebildet ist und neben dem Protection-Pfad für das vom RN an das OLT zu übertragende Wellenlängenmultiplexsignal auch einen Protection-Pfad für das vom OLT zum RN zu übertragende Wellenlängenmultiplexsignal bereitstellt. Jede der beiden bidirektionalen Übertragungsstrecken kann entweder mittels eines einzigen optischen Pfades, beispielsweise eines bidirektional genutzten Lichtwellenleiters, oder mittels zweier separater optischer Pfade, beispielsweise zweier jeweils unidirektional genutzter Lichtwellenleiter, realisiert werden.

Im OLT ist eine ansteuerbare optische Schaltereinheit vorgesehen, welche im normalen Betriebszustand die Working-Übertragungsstrecke für die bidirektionale Übertragung aktiviert und im Störungsfall, beispielsweise bei einem Auftrennen der Working-Übertragungsstrecke, auf die Protection-Übertragungsstrecke umschaltet. In jeder der beiden Schalterstellungen wird dasselbe vom OLT zum betreffenden RN zu übertragende Wellenlängenmultiplexsignal der gerade aktiven optischen Übertragungsstrecke zugeführt, d. h. entweder der Working-Übertragungsstrecke oder der Protection-Übertragungsstrecke. Da in der umgekehrten Übertragungsrichtung das vom betreffenden RN zum OLT zu übertragende Wellenlängenmultiplexsignal im RN beiden Übertragungsstrecken gleichzeitig zugeführt wird, kann dieses im OLT in jeder der beiden wählbaren Schalterstellungen empfangen werden.

Die Ansteuerung der im OLT vorgesehenen Schaltereinheit erfolgt abhängig vom Detektieren eines Fehlerzustandes, der auf eine Beeinträchtigung der gerade aktiven Übertragungsstrecke schließen lässt, insbesondere auf eine Beeinträchtigung der Working-Übertragungsstrecke.

Sind beide Übertragungsstrecken, d. h. sowohl die Working-Übertragungsstrecke als auch die Protection-Übertragungsstrecke in Form zweier separater optischer Pfade ausgebildet, so kann bei Detektieren eines Fehlerzustandes, der auf eine Beeinträchtigung nur eines einzigen der beiden gerade aktiven optischen Pfade schließen lässt, nur auf den diesen gestörten Pfad ersetzenden Pfad umgeschaltet werden. Ist beispielsweise nur der optische Working-Pfad gestört, der unidirektional für die Übertragung vom RN zum OLT genutzt wird, so kann auf den Protection-Pfad umgeschaltet werden, der unidirektional für die Übertragung vom RN zum OLT verwendet wird. Ist in diesem Fall der optische Working-Pfad, der für die Übertragung vom OLT zum RN genutzt wird, noch intakt, so kann dieser weiterhin für die Übertragung genutzt werden, ohne dass die Schaltereinheit gleichzeitig diesen Pfad durch den betreffenden Protection-Pfad für die Übertragung vom OLT zum RN ersetzen muss.

Für die Ermittlung eines für das Umschalten relevanten Fehlerzustandes können alle bekannten Prinzipien verwendet werden. Beispielsweise kann im OLT das vom RN zum OLT übertragene Signal erfasst werden. Wird für dieses Signal eine unzulässig hohe Signaldämpfung oder ein Signal-Empfangspegel gleich Null festgestellt, so kann ein Fehlerzustand festgestellt und ein entsprechendes Fehlersignal erzeugt werden. Das Erfassen des vom RN zum OLT übertragenen Wellenlängenmultiplexsignals im OLT erfolgt vorzugsweise an beiden Übertragungsstrecken bzw. an allen optischen Pfaden, welche ein Wellenlängenmultiplexsignal in Upstream-Richtung führen.

In diesem Zusammenhang sei darauf hingewiesen, dass unter einer Übertragung in Upstream-Richtung die Übertragung eines Signals vom RN zum OLT bzw. von einem ONU zum RN bzw. zum OLT verstanden wird und unter einer Übertragung in Downstream-Richtung die Übertragung eines Signals vom OLT zum RN bzw. vom OLT oder dem RN zu einem ONU.

Das Detektieren eines Fehlerzustandes kann grundsätzlich auch in einem oder mehreren Netzabschlussknoten (ONU) erfolgen, wobei in diesem Fall ein detektierter Fehlerzustand von dem ONU oder den betreffenden ONU's an das OLT signalisiert werden muss. Dies kann beispielsweise mittels eines entsprechenden Übertragungsprotokoll geschehen. Im OLT wird diese Fehlerinformation ausgewertet und erforderlichenfalls auf die jeweils andere optische Übertragungsstrecke oder den jeweils anderen (unidirektional genutzten) optischen Pfad umgeschaltet. Das Umschalten kann in diesem Fall vorzugsweise nur dann erfolgen, wenn zwei oder mehrere oder alle ONU's einen Fehlerzustand signalisieren. Denn stellt beispielsweise ein einziger ONU den Ausfall eines Empfangssignals fest, so kann dies auch durch den Ausfall der betreffenden Sendeeinheit im OLT verursacht sein. Die optische Übertragungsstrecke zwischen dem OLT und dem RN kann dann immer noch intakt sein, so dass ein Umschalten weder erforderlich noch sinnvoll ist.

Nach einer Ausführungsform der Erfindung werden für die Wellenlängenkanäle des Wellenlängenmultiplexsignals in Downstream-Richtung ein anderes Wellenlängenband oder andere Wellenlängenbereiche verwendet als für die Wellenlängenkanäle des Wellenlängenmultiplexsignals in Upstream-Richtung. Dies ermöglicht im OLT und dem wenigstens einen RN die Verwendung von relativ einfachen und kostengünstigen passiven wellenlängenabhängigen Einheiten zum Zusammenführen bzw. Trennen von Signalen, die in Upstream-Richtung und Downstream-Richtung geführt werden.

Erfindungsgemäß kann das grundsätzliche Protection-Prinzip auch auf den Fall der Anbindung mehrerer RN an das OLT mittels einer optischen Übertragungsstrecke in Form einer physikalischen Ringstruktur angewendet werden. Die ringförmige optische Übertragungsstrecke kann in diesem Fall durch einen bidirektional genutzten ringförmigen optischen Pfad realisiert sein oder durch zwei ringförmige optische Pfade, die jeweils unidirektional genutzt werden.

Das passive optische Übertragungsnetz ist in diesem Fall so strukturiert, dass an jedem RN ein oder mehrere, diesem RN zugeordnete Wellenlängenkanäle aus dem in Downstream-Richtung übertragenen Wellenlängenmultiplexsignal ausgekoppelt (Drop-Kanäle) und dem in Upstream-Richtung übertragenen Wellenlängenmultiplexsignal hinzugefügt (Add-Kanäle) werden. Die Kanäle, die in einem RN nicht gedroppt werden, werden mittels entsprechend ausgebildeter passiver optischer Komponenten im RN durchgeschleift.

Wie bereits vorstehend für die Anbindung eines einzigen RN oder die Anbindung mehrerer RN mit sternförmiger Struktur an ein OLT erläutert, wird erfindungsgemäß auch bei der ringförmigen Anbindung mehrerer RN in jedem RN das vom betreffenden RN an das OLT zu übertragene Wellenlängenmultiplexsignal beiden Teilzweigen des Rings zugeführt, d. h. das betreffende Wellenlängenmultiplexsignal wird sowohl am ostseitigen Anschluss des RN als auch am westseitigen Anschluss des RN in Richtung auf das OLT übertragen. Da das Wellenlängenmultiplexsignal, welches von einem bestimmten RN zum OLT übertragen wird, nur Wellenlängenkanäle umfasst, die ausschließlich diesem RN zugeordnet sind, werden diese Wellenlängenkanäle und somit dieses Teilmultiplexsignal durch alle anderen RN des Übertragungsrings durchgeschleift. Im OLT ist bei einer ringförmigen Anbindung mehrerer RN eine erste und eine zweite Signal-Switch-Einheit vorgesehen, welche jeweils mit einem Ende der ringförmigen Übertragungsstrecke verbunden sind, die aus einem einzigen bidirektional genutzten optischen Pfad bestehen kann oder aus zwei separaten, jeweils bidirektional genutzten optischen Pfaden. Im erstgenannten Fall weisen die Signal-Switch-Einheiten einen einzigen remote-seitigen Sende- und Empfangsport auf und im zweitgenannten Fall zwei remote-seitige Ports, nämlich einen remote-seitigen Sendeport und einen remote-seitigen Empfangsport.

Local-seitig besitzen die Signal-Switch-Einheiten für jeden RN einen local-seitigen Sendeport und einen local-seitigen Empfangsport. Dem local-seitigen Sendeport ist das Wellenlängenmultiplexsignal zugeführt, welches diejenigen Wellenlängenkanäle enthält, das dem betreffenden RN zugeführt werden soll. Die Signal-Switch-Einheit ist so beschaffen, dass sie sämtliche, an den local-seitigen Sendeports geführten (Teil-) Wellenlängenmultiplexsignale zu einem gesamten Wellenlängenmultiplexsignal zusammenfasst und im Fall eines einzigen ringförmigen optischen Pfads dem remote-seitigen Sende- und Empfangsport zuführt und im Fall der Anbindung der RN mittels zweier unidirektionaler optischer Pfade dem remote-seitigen Sendeport. Das der Signal-Switch-Einheit von den RN zugeführte Wellenlängenmultiplexsignal wird von der Signal-Switch-Einheit in die einzelnen, von den RN erzeugten (Teil-) Wellenlängenmultiplexsignalen aufgeteilt, wobei jedes dieser (Teil-) Wellenlängenmultiplexsignale einem local-seitigen Empfangsport zugeführt wird. Im Fall eines einzigen bidirektional genutzten ringförmigen optischen Pfades wird das von den RN übertragene Wellenlängenmultiplexsignal dem einseitigen remote-seitigen Sende- und Empfangsport zugeführt und von der Signal-Switch-Einheit entsprechend aufgeteilt. Im Fall zweier separater unidirektionaler optischer Pfade wird das von den RN übertragene Wellenlängenmultiplexsignal dem remote-seitigen Empfangsport zugeführt und entsprechend aufgeteilt.

Die Anbindung des jeweils anderen Endes der optischen Übertragungsstrecke kann über eine identisch ausgestaltete Signal-Switch-Einheit erfolgen.

Erfindungsgemäß erfolgt im Fall einer ringförmigen Anbindung mehrerer RN an das OLT getrennt für jeden RN das Detektieren eines Fehlerzustandes, der auf eine Beeinträchtigung des ostseitigen oder westseitigen Teils der ringförmigen optischen Übertragungsstrecke zwischen dem OLT und dem betreffenden RN schließen lässt. Mittels jeweils einer optischen Schaltereinheit kann dann separat für jeden RN bei Detektieren eines Fehlerzustandes des gerade aktiven ostseitigen oder westseitigen Teils der ringförmigen Übertragungsstrecke auf den jeweils anderen Teil der Übertragungsstrecke umgeschaltet werden. Im Fall zweier ringförmiger optischer Pfade besteht wiederum die Möglichkeit, den Downstream-Pfad getrennt vom Upstream-Pfad zu schalten. Es ist somit für jeden RN im OLT eine optische Schaltereinheit vorgesehen, die zwei Umschalter aufweist. Die Umschaltports des einen Umschalters der Schaltereinheiten sind mit den local-seitigen Sendeports der Signal-Switch-Einheiten verbunden, die dem jeweiligen RN zugeordnet sind. Die Schaltports des anderen Umschalters sind mit den local-seitigen Empfangports der Signal-Switch-Einheiten verbunden, die dem betreffenden RN zugeordnet sind. Den gemeinsamen Ports der Umschalter in den Downstream-Pfaden wird jeweils das an den betreffenden RN zu sendende (Teil-) Mulitplex-Signal zugeführt. Jedes dieser (Teil-) Multiplex-Signale kann im OLT mittels einer entsprechenden Anzahl von Sendeeinheiten erzeugt werden, die jeweils das Signal für einen Wellenlängenkanal erzeugen, wobei diese Signale jeweils einer Multiplexeinheit zugeführt sind, deren Multiplex-Port mit dem gemeinsamen Port des betreffenden Umschalters verbunden ist.

Erfindungsgemäß kann jeder RN eine Add-/Drop-Multiplexeinheit aufweisen, welche das ihr ostseitig oder westseitig zugeführte (Gesamt-) Wellenlängenmultiplexsignal empfängt und das für diesen RN bestimmte (Teil-) Wellenlängenmultiplexsignal auskoppelt. Die übrigen Wellenlängenkanäle werden zur jeweils anderen Seite (westseitig oder ostseitig) der Add-/Drop-Multiplexeinheit durchgeschleift und in Richtung auf weitere RN oder das OLT gesendet. Der Add-/Drop-Multiplexeinheit werden erfindungsgemäß sowohl in Richtung auf die Ostseite als auch in Richtung auf die Westseite das von diesem RN zum OLT zu sendende (Teil-) Wellenlängenmultiplexsignal zugeführt. Die Add-/Drop-Multiplexeinheit fügt dieses (Teil-) Wellenlängenmultiplexsignal auf beiden Seiten dem durchgeschleiften Wellenlängenmultiplexsignal hinzu. Damit ist gewährleistet, dass das OLT durch die Wahl einer entsprechenden Schalterstellung der Umschalter der Schaltereinheiten, die dem betreffenden RN zugeordnet ist, auswählen kann, ob das von dem betreffenden RN gesendete (Teil-) Wellenlängenmultiplexsignal über den ostseitigen oder westseitigen Zweig des Übertragungsrings empfangen werden soll.

Die Add-/Drop-Multiplexeinheit kann, ebenso wie die Signal-Switch-Einheiten des OLT einen einzigen ostseitigen und einen einzigen westseitigen remote-seitigen Sende- und Empfangsport aufweisen, wenn die Anbindung mittels eines einzigen ringförmigen optischen Pfades erfolgt. Erfolgt die Anbindung mittels zweier unidirektionaler ringförmiger optischer Pfade, so kann die Add-/Drop-Multiplexeinheit jeweils einen ostseitigen und westseitigen Empfangsport und jeweils einen ostseitigen und westseitigen Sendeport aufweisen.

Des Weiteren weist die Add-/Drop-Multiplexeinheit eines RN jeweils einen ostseitigen und einen westseitigen lokalen Empfangsport auf, an welchen, abhängig von der Schalterstellung im OLT, das jeweils empfangene und gedroppte (Teil-) Wellenlängenmultiplexsignal anliegt. Der ostseitige und westseitige lokale Empfangsport kann erfindungsgemäß mit einer als Combiner-Einheit arbeitenden Splitter-Einheit verbunden sein, deren Ausgang mit einer Demultiplexeinheit verbunden ist. Die Ausgangsports der Demultiplexeinheit führen dann die Signale der Wellenlängenkanäle, die den jeweiligen ONU's zugeführt werden müssen.

In gleicher Weise kann ein RN eine Multiplexeinheit aufweisen, deren Eingangsports die Signale der Wellenlängenkanäle der ONU zugeführt sind. Der Multiplexausgang der Multiplexeinheit ist ebenfalls mit einer Splittereinheit verbunden, deren einer Ausgang mit dem ostseitigen lokalen Sendeport und deren anderer Ausgang dem westseitigen lokalen Sendeport der Add-/Drop-Multiplexeinheit verbunden sind.

Die Anbindung der ONU an einen RN erfolgt vorzugsweise mittels einer Übertragunsstrecke, die durch einen einzigen bidirektional genutzten optischen Pfad realisiert ist. Hierdurch ergibt sich ein entsprechend geringer Verkabelungsaufwand.

Das Zuführen der Signale der vom RN empfangenen Wellenlängenkanäle zu einem ONU und das Empfangen und Zuführen des vom betreffenden ONU empfangenen Signals zur Multiplexeinheit des RN kann mittels einer Signal-Switch-Einheit erfolgen. Diese Signal-Switch-Einheit weist drei Ports auf, wobei ein erster Port mit dem optischen Pfad zwischen dem RN und dem betreffenden ONU verbunden ist, ein zweiter Port mit dem diesem ONU zugeordneten Ausgangsport der Demultiplexeinheit des RN und ein dritter Port mit dem diesen ONU zugeordneten Eingangsport der Multiplexeinheit des RN. Die Signal-Switch-Einheit leitet dabei das ihr vom Ausgangsport der Demultiplexeinheit zugeführte Signal an den ONU weiter und das vom ONU empfangene Signal an den betreffenden Port der Multiplexeinheit.

Die Signal-Switch-Einheit kann hierzu als Zirkulator ausgebildet sein. In diesem Fall ist es möglich, in Downstream-Richtung und in Upstream-Richtung zu einem ONU denselben Wellenlängenkanal zu verwenden.

Da ein Zirkulator jedoch ein relativ aufwändiges Bauelement ist, können die jeweils einem ONU zugeordneten Signal-Switch-Einheiten auch als passive wellenlängenabhängige Koppeleinheiten ausgebildet sein. In diesem Fall ist es dann jedoch erforderlich, für die Upstream- und Downstream-Richtung unterschiedliche Wellenlängenkanäle zu verwenden.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine schematische Blockdarstellung eines passiven optischen Übertragungsnetzes mit Protection-Mechanismus, wobei zwischen dem optischen Line Terminal und einem einzigen Remote Node zwei Übertragungsstrecken vorgesehen sind, die jeweils einen einzigen optischen Pfad umfassen,
- Fig. 2: ein optisches Übertragungsnetz ähnlich Fig. 1, jedoch mit zwei Übertragungsstrecken zwischen OLT und RN, die jeweils zwei separate unidirektionale optische Pfade umfassen;
- Fig. 3: eine schematische Darstellung eines passiven optischen Übertragungsnetzes mit mehreren RN, die mittels einer ringförmigen Übertragungsstrecke an das OLT angebunden sind, wobei die Übertragungsstrecke einen einzigen bidirektionalen optischen Pfad aufweist und
- Fig. 4: ein passives optisches Übertragungsnetz ähnlich Fig. 3, wobei die ringförmige Übertragungsstrecke zwei separate unidirektionale optische Pfade umfasst.

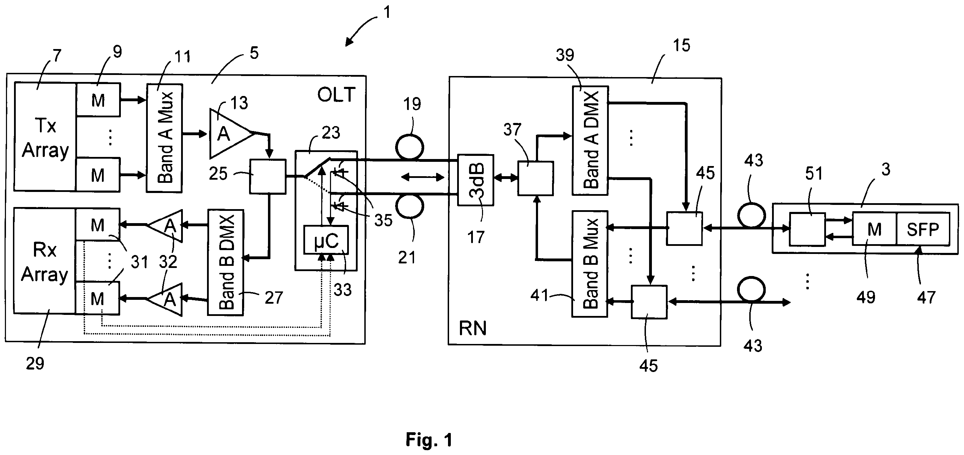

Fig. 1 zeigt ein schematisches Blockdiagramm eines passiven optischen Übertragungsnetzes 1, welches dazu dient, eine Vielzahl von optischen Netzabschlussknoten (ONU) 3 an ein optisches Line Terminal (OLT) 5 anzubinden, wobei zwischen jedem ONU 3 und dem OLT eine bidirektionale Datenübertragung ermöglicht wird. Das OLT 5 umfasst für jeden Wellenlängenkanal eines ONU 3 eine Sendeeinheit, die ein optisches Sendesignal erzeugt, welches jeweils eine bestimmte Mittenlängenwelle aufweist. Dieses optische Sendesignal belegt jeweils einen Wellenlängenkanal, der dem betreffenden ONU zugeordnet ist. Die Sendeeinheiten des OLT sind in Fig. 1 in Form eines Arrays 7 von Sendeeinheiten dargestellt. Jeder einzelnen Sendeeinheit kann eine Monitoring-Einheit 9 zugeordnet sein, welche jeweils detektiert, ob die betreffende Sendeeinheit ein korrektes optisches Signal im betreffenden Wellenlängenkanal abgibt. Die optischen Sendesignale sind einer Multiplexeinheit 11 zugeführt, welche diese Sendesignale zu einem Wellenlängenmultiplexsignal zusammenfasst. Das Wellenlängenmultiplexsignal ist einer optischen Verstärkereinheit 13 zugeführt, die dazu dient, das Wellenlängenmultiplexsignal auf eine gewünschten Sendepegel anzuheben und Dämpfungsverluste innerhalb des OLT 5 auszugleichen.

In dem in Fig. 1 dargestellten Ausführungsbeispiel eines passiven optischen Übertragungsnetzes ist der einzige Remote Node (RN) 15 mittels zweier optischer Übertragungsstrecken an das OLT angebunden. Die beiden Übertragungsstrecken sind in dem dargestellten Ausführungsbeispiel durch jeweils einen einzigen bidirektionalen optischen Pfad 19, 21, beispielsweise einen Lichtwellenleiter in Form einer Glasfaser, realisiert.

Der RN 15 ist so ausgebildet, dass im RN 15 alle von den ONU 3 empfangenen Signale jeweils eines bestimmten Wellenlängenkanals zu einem Wellenlängenmultiplexsignal zusammengefasst werden. Dieses Wellenlängenmultiplexsignal wird im RN 15 mittels einer 3dB-Splittereinheit 17 gleichzeitig beiden bidirektional genutzten optischen Pfaden 19 bzw. 21 zugeführt. Hierzu sind die optischen Pfade 19, 21 jeweils mit einem Splitting-Port der Splittereinheit 17 verbunden.

Im OLT sind die beiden Enden der optischen Pfade 19, 21 jeweils mit einem Umschaltport 23a, 23b einer optischen Schaltereinheit 23 verbunden.

Infolge der jeweils bidirektionalen Nutzung der optischen Pfade 19, 21 ist es erforderlich, im OLT eine Signal-Switch-Einheit 25 vorzusehen, welche drei Ports aufweist. Ein erster Port ist mit dem Ausgang des optischen Verstärkers 13 verbunden, so dass diesem Port das vom OLT 5 zum RN 15 zu übertragende Wellenlängenmultiplexsignal zugeführt wird. Ein zweiter Port der Signal-Switch-Einheit 25 ist mit dem gemeinsamen Port des Umschalters des optischen Schalters 23 verbunden, wobei diesem Port das vom RN 15 zum OLT 5 übertragene Wellenlängenmultiplexsignal zugeführt wird und wobei die Signal-Switch-Einheit 25 an diesem Port auch das ihr am ersten Port zugeführte, an den RN 15 zu sendende Wellenlängenmultiplexsignal abgibt. Der dritte Port der Signal-Switch-Einheit 25 ist mit dem Eingang einer Demultiplexeinheit 27 verbunden, wobei die Signal-Switch-Einheit 25 an diesem Port das ihr am zweiten Port zugeführte, vom RN 15 empfangene Wellenlängenmultiplexsignal abgibt.

Die Demultiplexeinheit 27 demultiplext das ihr geführte Wellenlängenmultiplexsignal in die einzelnen Signale der betreffenden Wellenlängenkanäle und führt diese jeweils einer Empfangseinheit für den betreffenden Wellenlängenkanal zu. In Fig. 1 sind die Empfangseinheiten für die einzelnen Wellenlängenkanäle als Array 29 von Empfangseinheiten dargestellt. Jede Empfangseinheit kann wiederum eine Monitoring-Einheit 31 umfassen, mit welcher detektiert wird, ob der betreffenden Empfangseinheit das Signal des jeweiligen Wellenlängenkanals mit ausreichendem Empfangspegel zugeführt wird. Zwischen jedem Ausgangsport der Demultiplexeinheit 27 und dem Eingangsport der jeweiligen Empfangseinheit kann eine optische Verstärkereinheit 32 vorgesehen sein, wobei die Anordnung von Verstärkereinheiten im Pfad des jeweiligen Wellenlängenkanals den Vorteil bietet, dass das Signal jedes Wellenlängenkanals individuell auf einen gewünschten Empfangspegel angehoben werden kann.

Die Monitoring-Einheiten 31 können jeweils mit einer Steuereinrichtung in Form einer Steuereinheit 33 für die optische Schaltereinheit 23 verbunden sein. Die Monitoring-Einheiten 31 können zusätzlich oder an Stelle der Überwachung der Empfangspegel der Empfangssignale auch eine in den Empfangssignalen enthaltene Fehlerzustands-Information auswerten. Eine derartige Fehlerzustands-Information, die in den Empfangssignalen transportiert wird, kann von den ONU 3 erzeugt werden, beispielsweise wenn der betreffende ONU 3 feststellt, dass sein Empfangssignal nicht mehr den gewünschten Empfangspegel aufweist oder vollständig weggefallen ist, d. h. der Empfangspegel auf Null abgesunken ist. Sowohl diese Fehlerzustands-Information als auch eine von den Monitoring-Einheiten 31 bei der Überwachung der Empfangspegel erzeugte Fehlerzustands-Information kann an die Steuereinheit 33 übermittelt werden. Die Steuereinheit 33 kann dann die gesamte Fehlerzustands-Information auswerten und abhängig hiervon die optische Schaltereinheit 23 so ansteuern, dass von der in der normalen Betriebsweise aktiven Working-Übertragungsstrecke bzw. dem diese realisierenden bidirektionalen optischen Working-Pfad 19 auf die Protection-Übertragungsstrecke bzw. den diesen realisierenden bidirektionalen optischen Protection-Pfad 21 umgeschaltet wird.

An Stelle Fehlerzustands-Informationen, die von den Monitoring-Einheiten 31 an die Steuereinheit 33 übertragen werden oder zusätzlich zu diesen Fehlerzustands-Informationen kann der Steuereinheit 33 auch jeweils das Signal zweier Detektoren 35 zugeführt werden, mit welchen jeweils das im OLT empfangene Wellenlängenmultiplexsignal erfasst wird. Hierzu kann das jeweils den Umschaltports 23a, 23b zugeführte Wellenlängenmultiplexsignal von dem betreffenden Detektor 35 erfasst werden. Beispielsweise kann hierzu ein optischer Koppler verwendet werden, der aus dem optischen Pfad für das jeweils empfangene Wellenlängenmultiplexsignal einen geringen Bruchteil der optischen Leistung des Signals auskoppelt und dem Detektor 35 zuführt. Die Steuereinheit 33 kann dann ermitteln, ob das jeweilige empfangene Wellenlängenmultiplexsignal mit einem ausreichenden Empfangspegel vorliegt. Ist dies nicht der Fall oder ist insbesondere der Empfangspegel vollständig auf Null abgesunken, so kann die Steuereinheit 33 auf eine Störung des jeweiligen optischen Pfades 19 oder 21 schließen und auf einen jeweils intakten Pfad umschalten.

Die Steuereinheit 33 kann, wie in Fig. 1 dargestellt, in der optischen Schaltereinheit 23 integriert sein. Gleiches gilt für die Detektoren 35. Jede dieser Einheiten kann jedoch auch selbstverständlich sowohl separat ausgebildet sein als auch in eine andere Einheit integriert sein.

Im RN 15 ist der local-seitige Port der Splittereinheit 17 über eine Signal-Switch-Einheit 37 sowohl mit dem Eingangsport einer Demultiplexeinheit 39 als auch mit dem Ausgangsport einer Multiplexeinheit 41 verbunden. Die Signal-Switch-Einheit 37 erfüllt dabei eine Funktion analog der Signal-Switch-Einheit 25 im OLT 5. Das im RN 15 empfangene Wellenlängenmultiplexsignal wird von der Signal-Switch-Einheit 37 dem Eingang der Demultiplexeinheit 39 zugeführt, welche das Wellenlängenmultiplexsignal in die Signale der einzelnen Wellenlängenkanäle demultiplext. Des Weiteren führt die Signal-Switch-Einheit 37 das ihr von der Multiplexeinheit zugeführte Wellenlängenmultiplexsignal, welches die Signale der Wellenlängenkanäle sämtlicher ONU 3 umfasst, der Splittereinheit 17 zu.

Die beiden Signal-Switch-Einheiten 25 bzw. 37 können als Zirkulatoren ausgebildet sein, wobei sich in diesem Fall der Vorteil ergibt, dass für die in beiden Richtungen zwischen dem OLT und dem RN übertragenen Wellenlängenkanäle auch identische Mittenfrequenzen verwendet werden können. Insbesondere kann sowohl in Downstream-Richtung zwischen dem OLT und einem ONU und in der betreffenden Upstream-Richtung jeweils ein Wellenlängenkanal mit identischer Mittenfrequenz verwendet werden.

Bei sämtlichen, in den Fig. 1 bis 4 dargestellten Ausführungsbeispielen sind die ONU 3 mittels einer Übertragungsstrecke, die aus einem einzigen bidirektionalen optischen Pfad 43 besteht, an den RN 15 angebunden. Hierdurch wird ein entsprechend geringer Verkabelungsaufwand erreicht.

Durch die bidirektionale Anbindung der ONU 3 an den RN 15 ist es erforderlich, für jeden ONU im RN 15 eine weitere Signal-Switch-Einheit 45 vorzusehen. Jede Signal-Switch-Einheit 45 wird von der Demultiplexeinheit 39 das Signal des betreffenden Wellenlängenkanals zugeführt, welches von der Signal-Switch-Einheit 45 an den ONU 3 weitergeleitet wird, dem dieser Wellenlängenkanal zugeordnet ist. In gleicher Weise führt die Signal-Switch-Einheit 45 das ihr vom jeweiligen ONU 3 zugeführte Signal des vorbestimmten Wellenlängenkanals für die Übertragung in Upstream-Richtung dem zugeordneten Eingangsport der Multiplexeinheit 41 zu.

Auch diese Signal-Switch-Einheiten 45 können als passive optische Zirkulatoren ausgebildet sein.

Sämtliche der Signal-Switch-Einheiten 25, 37 und 45 können jedoch auch als passive wellenlängenabhängige Koppeleinheiten realisiert werden, wenn für die in Upstream-Richtung und Downstream-Richtung übertragenen Wellenlängenkanäle jeweils ein anderes Wellenlängenband oder andere Wellenlängenbereiche verwendet werden.

Jeder ONU 3 umfasst eine Transceiver-Einheit 47 für den Empfang des Signals des betreffenden Empfangs-Wellenlängenkanals und zur Erzeugung des Signals des betreffenden Sende-Wellenlängenkanals. Die Transceiver-Einheit 47 kann dabei eine Monitoring-Einheit 49 aufweisen, welche detektiert, ob das Empfangssignal noch mit dem gewünschten Empfangspegel vorliegt oder nicht. Abhängig hiervon kann die Transceiver-Einhei 47 eine Fehlerzustands-Information in das Sendesignal integrieren, welches dann im OLT in der Monitoring-Einheit 31 der zugeordneten Empfangseinheit ausgewertet werden kann.

Infolge der bidirektionalen Übertragung auf einem einzigen optischen Pfad zwischen den ONU 3 und dem RN 15 umfasst auch jeder ONU 3 eine Signal-Switch-Einheit 51 zur Trennung der Signale in Uptstream-Richtung und Downstream-Richtung. Auch diese Signal-Switch-Einheit 51 arbeitet in analoger Weise wie die Signal-Switch-Einheiten 25, 37 und 45 und kann entsprechend ausgebildet sein. Ein der Signal-Switch-Einheit 51 vom optischen Pfad 43 zugeführtes Signal wird dem Empfangsteil der Transceiver-Einheit 47 zugeführt und das der Signal-Switch-Einheit 51 vom Sendeteil der Transceiver-Einheit 47 zugeführte Sendesignal wird dem optischen Pfad 43 zugeführt.

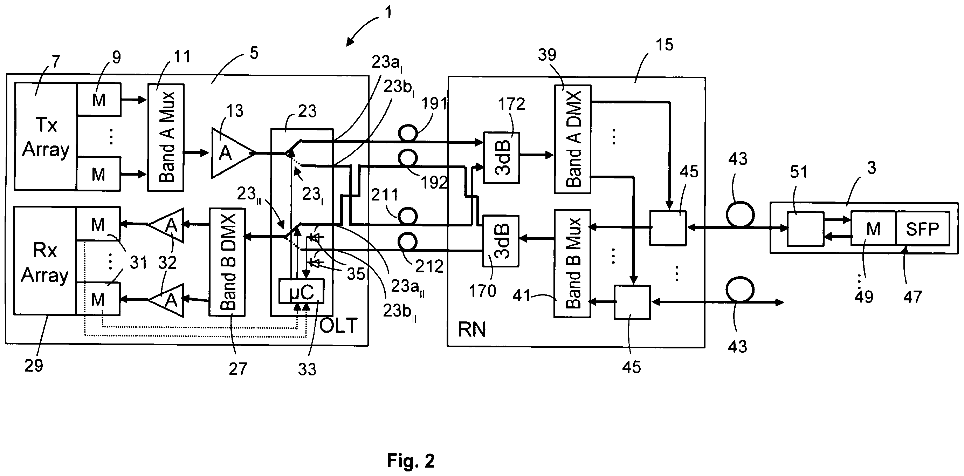

Die in Fig. 2 dargestellte Ausführungsform eines passiven optischen Übertragungsnetzes 1 unterscheidet sich von der in Fig. 1 dargestellten Ausführungsform lediglich dadurch, dass die beiden optischen Übertragungsstrecken zur Verbindung des RN 15 und des OLT 5 durch jeweils zwei separate, unidirektionale betriebene optische Pfade 191, 192 bzw. 211, 212 realisiert sind.

Infolge der jeweils unidirektional betriebenen Pfade 191, 192 und 211, 212 kann auf die in Fig. 1 dargestellten Signal-Switch-Einheiten 25 und 37 verzichtet werden. Stattdessen sind jedoch im RN 15 an Stelle der einzigen 3dB Splittereinheit 17 zwei separate Splittereinheiten 170, 172 erforderlich. Die 3dB-Splittereinheit 170 splittet dabei das ihr von der Multiplexeinheit 41 zugeführte Wellenlängenmultiplexsignal und führt es jeweils zu gleichen Teilen dem optischen Working-Pfad 192 und dem optischen Protection-Pfad 212 zu.

Die zweite optische Splittereinheit 172 ist mit einem der Splitting-Ports mit dem Working-Pfad 191 in Downstream-Richtung verbunden und mit dem anderen Splitting-Port mit dem Protection-Pfad 211 in Downstream-Richtung. Die Splitter-Einheit 172 arbeitet dabei als Combiner-Einheit und führt an ihrem Ausgangsport das Signal der Demultiplexeinheit 39 zu.

Durch die Realisierung der Working-Übertragungsstrecke und der Protection-Übertragungsstrecke durch jeweils zwei separate unidirektionale optische Pfade 191, 192 und 211, 212 muss die Schaltereinheit 23 im OLT 5 in diesem Fall zwei Umschalter 23_{I} und 23_{II} aufweisen. Die Umschaltports 23a_{I} und 23b_{I} sind mit dem Ende des Working-Pfads für die Upstream-Richtung bzw. mit dem Protection-Pfad 211 für die Upstream-Richtung verbunden. Der gemeinsame Port des Umschalters 23_{I} ist mit dem Ausgang des optischen Verstärkers 13 verbunden.

In gleicher Weise sind die Umschaltports 23a_{II} und 23b_{II} mit dem Working-Pfad 192 für die Upstream-Richtung und dem Protection-Pfad 212 für die Upstream-Richtung verbunden. Der gemeinsame Port des Umschalters 23_{II} ist dem Eingangsport der Demultiplexeinheit 27 verbunden.

Bei der in Fig. 2 dargestellten Ausführungsform sind die Detektoren 35 in den optischen Pfaden vorgesehen, die mit den Umschaltports 23 a_{II} und 23 b_{II} des Umschalters 23_{II} vorgesehen. Denn nur in diesen Pfaden tritt das vom OLT 5 empfangene Wellenlängenmultiplexsignal auf.

Diese in Fig. 2 dargestellte Konfiguration ermöglicht es theoretisch, nur auf einen der Protection- Pfade 192, 212 umzuschalten, wenn nur der zugehörige Working-Pfad 191 für die Downstream-Richtung oder nur der zugehörige Working-Pfad 192 für die Upstream-Richtung gestört bzw. unterbrochen ist. Zu einer geeigneten Ansteuerung der Umschalter 23_{I} und 23_{II} kann die Steuereinheit 33, wie auch im Fall der Ausführungsform gemäß Fig. 1, Fehlerzustands-Informationen auswerten, die von den Detektoren 35 oder den Monitoring-Einheit 31 geliefert werden.

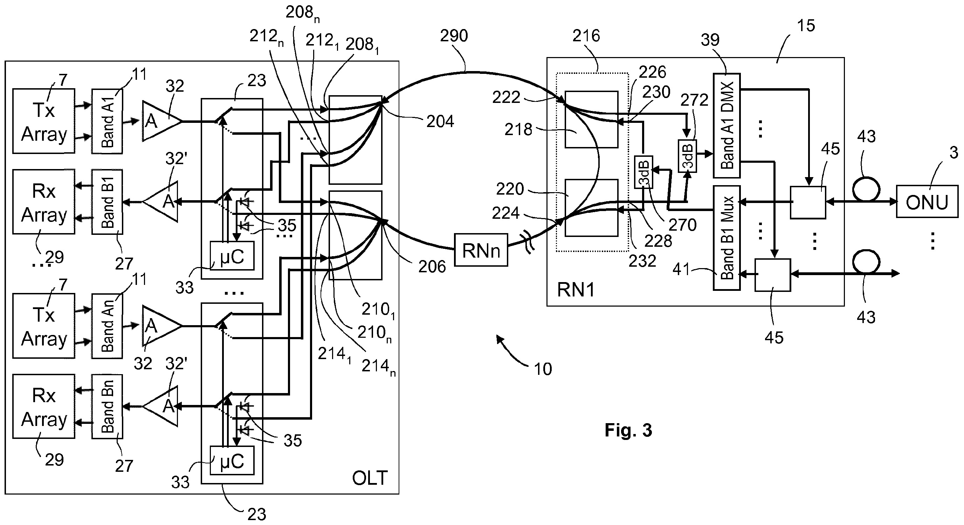

Fig. 3 zeigt eine Ausführungsform eines passiven optischen Übertragungsnetzes 10, bei dem eine Vielzahl von ONU 3 über mehrere RN 15, die auch mit RN1 bis RNn bezeichnet sind, an ein OLT 5 angebunden sind. Die Anbindung der RN 15 erfolgt dabei mittels einer ringförmigen Übertragungsstrecke, welche bei der in Fig. 3 dargestellten Ausführungsform durch einen einzigen bidirektional genutzten ringförmigen optischen Pfad 290, beispielsweise einen Lichtwellenleiter, realisiert ist.

Wie in Fig. 3 dargestellt, erfolgt die Anbindung des bidirektionalen ringförmigen optischen Pfads 290 an das OLT 5 mittels im OLT vorgesehener Signal-Switch-Einheiten 200 (westseitige Anbindung des OLT) und 202 (ostseitige Anbindung des OLT), welche jeweils einen remote-seitigen Sende- und Empfangsport 204 bzw. 206 aufweisen. Des Weiteren besitzen die Signal-Switch-Einheiten 200 und 202 für jeden der n RN (RN1 bis RNn) einen lokalen Sendeport 208₁ bis 208ₙ bzw. 210₁ bis 210ₙ sowie einen lokalen Empfangsport 212₁ bis 212ₙ bzw. 214₁ bis 214ₙ auf.

Den Signal-Switch-Einheiten 200 bzw. 202 wird an den lokalen Sendeports 208₁ bis 208ₙ bzw. 210₁ bis 210ₙ jeweils das betreffende, im OLT erzeugte Teilmultiplexsignal zugeführt, welches sämtliche Wellenlängenkanäle umfasst, die dem betreffenden RN 15 (RN1 bis RNn) zugeordnet sind. Die Signal-Switch-Einheiten 200 bzw. 202, die als passive optische Komponenten ausgebildet sind, fassen diese Teilwellenlängenmultiplexsignale zu jeweils einem Gesamtwellenlängenmultiplexsignal zusammen, welche an den remote-seitigen Sende- und Empfangsports 204, 206 abgegeben werden. An welchem Sende- und Empfangsport 204 oder 206 das betreffende Teilmultiplexsignal in Richtung auf den zugeordneten RN 15 abgegeben wird, entscheidet die Schalterstellung der beiden Umschalter einer Schaltereinheit 23, die dem betreffenden RN 15 zugeordnet ist. Diese Schaltereinheit 23 im OLT 5 weist dieselbe Funktionalität auf wie die Schaltereinheit 23 im Fall der in Fig. 2 beschriebenen Ausführungsform. Bei der Ausführungsform nach Fig. 3 ist jedoch für jeden der RN 15 eine entsprechende Schaltereinheit 23 vorgesehen, wobei im OLT 5 nach Fig. 3 lediglich die Schaltereinheiten 23 für den ersten RN 15 (RN1) und den n-ten 15 (RNn) dargestellt sind.

Die Umschaltports des ersten Umschalters der Schaltereinheiten 23, deren gemeinsamen Schaltports die jeweils zu sendenden Teilwellenlängenmultiplexsignale zugeführt sind, sind mit den lokalen Sendeports 208₁ bzw. 210₁ bis 208n bzw. 210n der Signal-Switch-Einheiten 200 bzw. 202 verbunden. Abhängig von der Schalterstellung der Umschalter der Schaltereinheiten 23 wird somit das an den betreffenden Knoten zu sendende Teilwellenlängenmultiplexsignal dem westseitigen Sende- und Empfangsport 204 der Signal-Switch-Einheit 200 oder dem ostseitigen Sende- und Empfangsport 206 der Signal-Switch-Einheit 202 zugeführt. Bei der in Fig. 3 dargestellten Schalterstellung wird dem in ausführlicher Form dargestellten ersten RN 15 (RN1) das betreffende Teilwellenlängenmultiplexsignal über den westseitigen Sende- und Empfangsport 204 der Signal-Switch-Einheit 200 zugeführt. Dem n-ten RN 15 (RNn) wird bei der in Fig. 3 dargestellten Schalterstellung der zugeordneten Schaltereinheit 23 das betreffende Teilwellenlängenmultiplexsignal über den ostseitigen Sende- und Empfangsport 206 der Signal-Switch-Einheit 202 zugeführt.

Die für einen vorgegebenen RN 15 bestimmten Kanalsignale werden von einer Anzahl entsprechender Sendeeinheiten erzeugt, wobei in Fig. 3 die jeweils einem RN 15 zugeordneten Sendeeinheiten zu jeweils einem Array 7 von Sendeeinheiten zusammengefasst sind. Selbstverständlich können diese Sendeeinheiten wie in den Fig. 1 und 2 dargestellt und diesem Zusammenhang erläutert, auch Monitoring-Einheiten umfassen, mit denen das gesendete optische Signal erfasst und überwacht werden kann.

Die Umschaltports des zweiten Umschalters jeder Schaltereinheit 23 sind jeweils mit den beiden lokalen Empfangsports 212₁ bis 212ₙ bzw. 214₁ bis 214ₙ verbunden, welche dem jeweiligen RN 15 zugeordnet sind. Da, wie nachstehend erläutert, von jedem RN 15 das an das OLT zu übertragende Teilwellenlängenmultiplexsignal sowohl auf dem ostseitigen als auch auf dem westseitigen Teilpfad des ringförmigen optischen Pfads 290 in Richtung auf das OLT 5 gesendet wird, kann mittels der zweiten Umschalter der Schaltereinheiten 23 ausgewählt werden, welches dieser jeweils empfangenen Teilwellenlängenmultiplexsignale verwendet werden soll. Im Fall einer Störung des ostseitigen oder westseitigen Teils der ringförmigen Übertragungsstrecke bzw. des ringförmigen optischen Pfads 290 kann dann auf den jeweils ungestörten Teilpfad umgeschaltet werden. Das empfangene Teilwellenlängenmultiplexsignal mit mittels einer Demultiplexeinheit 27 gedemultiplext, so dass die einzelnen Signale der betreffenden Wellenlängenkanäle, die dem jeweiligen Knoten zugeordnet sind, entsprechenden Empfangseinheiten zugeführt werden können. Die Empfangseinheiten sind in Fig. 3 wiederum als Arrays 29 von Empfangseinheiten dargestellt, wobei jedem RN 15 ein entsprechendes Array von Empfangseinheiten 29 zugeordnet ist.

Anders als in den Fig. 1 und 2 ist bei der Ausführungsform nach Fig. 3 eine Verstärkung des jeweiligen Teilwellenlängenmultiplexsignals mittels eines optischen Verstärkers 32' vorgesehen. Selbstverständlich kann jedoch auch in diesem Fall das Signal jedes einzelnen Wellenlängenkanals mittels eines jeweils separaten optischen Verstärker, der im Pfad zwischen der Demultiplexeinheit und jeweils der zugehörigen Empfangseinheit angeordnet ist, auf den gewünschten Empfangspegel angehoben werden.

In den jeweils einem RN 15 zugeordneten Sendepfaden im OLT erfolgt auch bei der Ausführungsform nach Fig. 3 eine Verstärkung des jeweiligen Teilwellenlängenmultiplexsignals, bevor dieses dem gemeinsamen Port der ersten Umschalter der Schaltereinheiten 23 zugeführt wird.

Die Ausführungsform nach Fig. 3 ermöglicht es somit, getrennt für jeden RN 15 bei einer Störung bzw. Unterbrechung des ostseitigen oder westseitigen Teilpfads des ringförmigen optischen Pfads 290 auf den jeweils anderen Teilpfad umzuschalten. Ist einer dieser Teilpfade noch intakt, so kann die bidirektionale Übertragung zwischen dem OLT 5 und dem jeweiligen RN 15 bzw. den diesen RN 15 zugeordneten ONU's 3 aufrechterhalten werden. Die Ansteuerung der jeweils einem RN 15 zugeordneten Schaltereinheiten 23 erfolgt bei der in Fig. 3 dargestellten Ausführungsform durch jeweils separate, ebenfalls dem betreffenden RN 15 zugeordnete Steuereinheiten 33. Diesen Steuereinheiten 33 können dieselben Informationen und Signale betreffend Fehlerzustands-Informationen zugeführt sein wie bei den in Fig. 1 und 2 dargestellten Ausführungsformen. Aus Gründen der Einfachheit sind in Fig. 3 jedoch nur jeweils die Detektoren 35 eingezeichnet. Selbstverständlich können die Steuereinheiten 33 auch zu einer Steuereinheit zusammengefasst und an beliebiger Stelle im OLT vorgesehen sein.

Bei der in Fig. 3 dargestellten Ausführungsform eines passiven optischen Übertragungsnetzes weisen die RN 15 zur Anbindung bzw. Einbindung in den ringförmigen optischen Pfad 290 eine passive Add-/Drop-Multiplexeinheit 216 auf, die aus zwei Signal-Switch-Einheiten 218, 220 besteht. Jede der Signal-Switch-Einheiten 218, 220 weist einen remote-seitigen Sende- und Empfangsport 222, 224 auf. Der Sende- und Empfangsport 222 ist mit dem ostseitigen Teilpfad und der Sende- und Empfangsport 224 ist mit dem westseitigen Teilpfad (jeweils aus der Sicht des RN) des ringförmigen optischen Pfads 290 verbunden.

Des Weiteren weist jede der Signal-Switch-Einheiten 218, 220 einen lokalen Empfangsport 226, 228 sowie einen lokalen Sendeport 230, 232 auf.

Die remote-seiten und lokalen Ports der Signal-Switch-Einheiten 218, 220 definieren gleichzeitig entsprechende Ports der Add-/Drop-Multiplexeinheit 216.

Die Signal-Switch-Einheiten 218, 220 koppeln aus dem am Sende- und Empfangsport 222, 224 empfangenen Wellenlängenmultiplexsignal das jeweils für den betreffenden RN 15 bestimmte Teilwellenlängenmultiplexsignal aus und führen dies dem lokalen Empfangsport 226 bzw. 228 zu. Das den lokalen Sendeports 230 bzw. 232 zugeführte, im jeweiligen RN 15 erzeugte Teilwellenlängenmultiplexsignal führen die Signal-Switch-Einheiten 218, 220 jeweils dem Sende- und Empfangsport 222 bzw. 224 zu und multiplexen das betreffende Teilwellenlängenmultiplexsignal mit dem jeweils durchgeschleiften Signal. Für das Durchschleifen des verbleibenden Teils des Wellenlängenmultiplexsignals sind die Signal-Switch-Einheiten 218, 220 derart verbunden, dass sich in Bezug auf das durchgeschleifte (Rest-) Wellenlängenmultiplexsignal der geschlossene ringförmige optische Pfad 290 ergibt. Der ringförmige optische Pfad 290 besteht somit aus den Lichtwellenleitern sowie den Teilen des optischen Pfades zwischen den remote-seitigen Sende- und Empfangsports 222 und 224 der RN 15.

An dieser Stelle sei darauf hingewiesen, dass unter dem (geschlossenen) ringförmigen Pfad ein Pfad zu verstehen ist, der zwischen den remote-seitigen Sende- und Empfangsports 204, 206 der Signal-Switch-Einheiten 200, 202 des OLT5 eine ringförmige, geschlossene optische Übertragungsstrecke darstellt.

Die weitere Ausbildung der RN 15 in Fig. 3 entspricht weitestgehend der Ausbildung des RN 15 nach Fig. 2. Es sind wiederum zwei 3dB-Splittereinheiten 270, 272 vorgesehen, wobei die Splittereinheit 270 dazu dient, das ihr zugeführte Teilwellenlängenmultiplexsignal gleichzeitigen den lokalen Sendeports 230, 232 der Add-/Drop-Multiplexeinheit 216 zuzuführen. Die als Combiner-Einheit arbeitende Splittereinheit 272 ist mit den beiden lokalen Empfangsports 226, 228 der Add-/Drop-Multiplexeinheit 216 verbunden und führt das auf dem einen oder anderen Zweig empfangene Teilwellenlängenmultiplexsignal der Demultiplexeinheit 39 zu. Hinsichtlich der weiteren Komponenten der RN 15 nach Fig. 3 und der Anbindung der ONU's 3 an die RN 15 sei auf die Beschreibung zu den RN nach den Fig. 1 und 2 verwiesen.

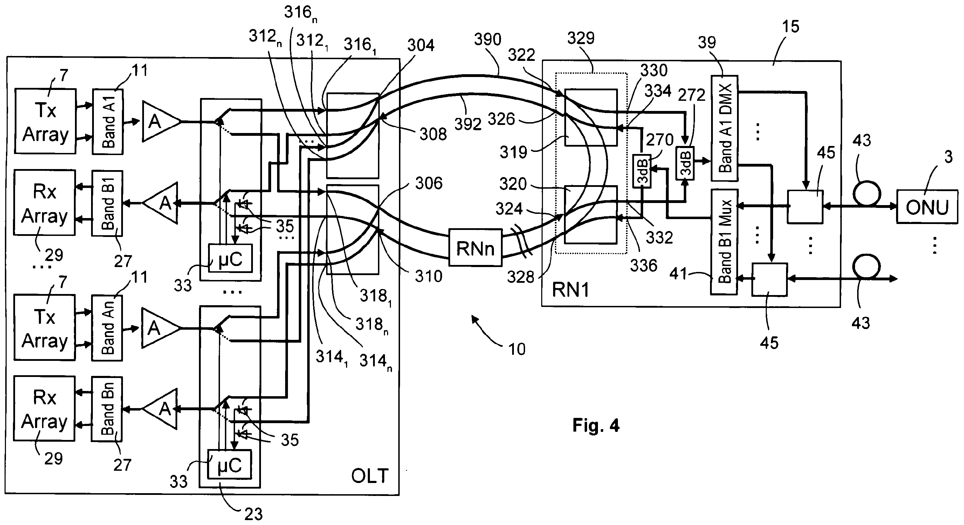

Die in Fig. 4 dargestellte Ausführungsform eines passiven optischen Übertragungsnetzes 100 unterscheidet sich von der Ausführungsform nach Fig. 3 lediglich dadurch, dass die ringförmige optische Übertragungsstrecke an Stelle eines einzigen, bidirektional genutzten optischen Pfads zwei unidirektional genutzte optische Pfade 390, 392 aufweist. Damit ergeben sich lediglich geringfügige Änderungen hinsichtlich der Signal-Switch-Einheiten im OLT 5 und hinsichtlich der Add-/Drop-Multiplexeinheit bzw. der diese realisierenden Signal-Switch-Einheiten in den RN 15.

Wie aus Fig. 4 ersichtlich, weisen die Signal-Switch-Einheiten 300, 302 bei dieser Ausführungsform jeweils getrennte remote-seitige Sendeports 304, 306 und Empfangsports 308, 310 auf. Die an den remote-seitigen Empfangsports 308, 310 empfangenen Wellenlängenmultiplexsignale werden in die einzelnen Teilmultiplex-Signale aufgeteilt und, wie bei der Ausführungsform in Fig. 3, jeweils lokalen Empfangsports 312₁ bis 312ₙ bzw. 314₁ bis 314ₙ zugeführt. In gleicher Weise werden die den lokalen Sendports 316₁ bis 316ₙ bzw. 318₁ bis 318ₙ zugeführten Teilwellenlängenmultiplexsignale dem jeweiligen remote-seitigen Sendeport 304 bzw. 306 zugeführt. Im Übrigen ist die Konfiguration und Funktionsweise des OLT 5 nach Fig. 4 identisch mit der Konfiguration und Funktionsweise des OLT 5 nach Fig. 3.

Auch die Add-/Drop-Multiplexeinheit 329 der RN 15 in Fig. 4 weist getrennte remote-seitige Empfangsports 322 bzw. 324 und Sendeports 326 bzw. 328 auf. Darüber hinaus sind die Signal-Switch-Einheiten 318, 320 so ausgestaltet, dass nicht gedroppte Teilwellenlängenmultiplexsignale als Rest-Wellenlängenmultiplexsignal durchgeschleift werden. Hierzu sind die Signal-Switch-Einheiten 318, 320 mittels entsprechender optischer Pfade verbunden. Damit ergeben sich zwei separate unidirektional genutzte ringförmige optische Pfade 390, 392 zur Anbindung der RN 15 an das OLT 5.

Die Signal-Switch-Einheiten 318, 320 sind infolge der separaten remote-seitigen Empfangsports 322, 324 und Sendeports 326, 328 so ausgestaltet, dass an den lokalen Empfangsports 330, 332 die gedroppten Teilwellenlängenmultiplexsignale abgegeben werden und dass das jeweils den lokalen Sendeports 334, 336 zugeführte Teilwellenlängenmultiplexsignal den remote-seitigen Sendeports 326, 328 zugeführt werden. Im Übrigen ist auch die Konfiguration und Funktionsweise der RN 15 nach Fig. 4 identisch mit der Konfiguration und Funktionsweise der RN 15 nach Fig. 3.

## Patentansprüche

1. Passives optisches Übertragungsnetz mit Protection-Mechanismus, welches ein optisches Line Terminal (5) umfasst, das mit wenigstens einem Remote Node (15) verbunden ist, an welchem eine Mehrzahl von Netzabschlussknoten (3) angebunden ist,
(a) wobei zwischen jedem Netzabschlussknoten (3) und dem optischen Line Terminal (5) eine bidirektionale optische Signalübertragung herstellbar ist,
(b) wobei die Verbindung zwischen dem optischen Line Terminal (5) und dem wenigstens einen Remote Node (15) über eine erste bidirektionale optische Übertragungsstrecke erfolgt, über welche in Downstream-Richtung vom optischen Line Terminal (5) zu dem wenigstens einen Remote Node (15) und in Upstream-Richtung von dem wenigstens einen Remote Node (RN1 bis RNn) zum optischen Line Terminal (5) jeweils ein optisches Wellenlängenmultiplexsignal übertragen wird,
(c) wobei zwischen dem optischen Line Terminal (5) und dem wenigstens einen Remote Node (15) eine zweite bidirektionale optische Übertragungsstrecke vorgesehen ist und
(d) wobei in dem wenigstens einen Remote Node (15) das Wellenlängenmultiplexsignal in Upstream-Richtung mittels einer passiven optischen Splittereinheit (17, 170) sowohl der ersten optischen Übertragungsstrecke als auch der zweiten optischen Übertragungsstrecke zugeführt wird,
**dadurch gekennzeichnet,**
(e) **dass** im optischen Line Terminal (5) eine Steuereinheit (33) vorgesehen ist, welche bei Detektieren eines Fehlerzustandes, der auf eine Beeinträchtigung der ersten oder zweiten optischen Übertragungsstrecke schließen lässt, eine steuerbare optische Schaltereinheit (23) so ansteuert, dass zum Senden des Wellenlängenmultiplexsignals in Downstream-Richtung und/oder zum Empfang des Wellenlängenmultiplexsignals in Upstream-Richtung auf die jeweils andere optische Übertragungsstrecke umgeschaltet wird,
(f) **dass** die erste und zweite optische Übertragungsstrecke jeweils zwei unidirektionale optische Pfade (191, 192; 211, 212) mit jeweils entgegengesetzter Übertragungsrichtung für die Übertragung der Wellenlängenmultiplexsignale in Downstream-Richtung und Upstream-Richtung umfassen
(g) **dass** in dem wenigsten einen Remote Node (15) jeweils die beiden Splitting-Ports jeweils einer Splittereinheit (170; 172) mit den beiden optischen Pfaden (191, 211; 192, 212) für dieselbe Übertragungsrichtung verbunden sind, dass der gemeinsame Port der Splittereinheit (172), welcher das Wellenlängenmultiplexsignal in Downstream-Richtung zugeführt ist, mit einer Demultiplexeinheit (39) verbunden ist und dass der gemeinsame Port der Splittereinheit (170), welcher das Wellenlängenmultiplexsignal in Upstream-Richtung zugeführt ist, mit einer Multiplexeinheit (41) verbunden ist.

2. Passives optische Übertragungsnetz nach Anspruch 1, **dadurch gekennzeichnet, dass** im optischen Line Terminal (5) jeweils die Schaltports (23a_{I}, 23b_{I}; 23a_{II}, 23b_{II}) jeweils eines Umschalters (23_{I}, 23_{II}) der optischen Schaltereinheit (23) mit den beiden optischen Pfaden (191, 211; 192, 212) für dieselbe Übertragungsrichtung verbunden sind, dass der gemeinsame Port des Schalters (23_{II}) für das vom optischen Line Terminal (5) empfangene Wellenlängenmultiplexsignal mit einer Demultiplexeinheit (27) verbunden ist und der gemeinsame Port des Schalters (23_{I}) für das vom optischen Line Terminal (5) zu sendende Wellenlängenmultiplexsignal mit einer Multiplexeinheit (11), und dass in der Verbindung zwischen dem gemeinsamen Port des Schalters (23_{I}) für das vom optischen Line Terminal (5) zu sendende Wellenlängenmultiplexsignal mit der Multiplexeinheit (11) vorzugsweise eine optische Verstärkereinheit (13) vorgesehen ist.

3. Passives optisches Übertragungsnetz mit Protection-Mechanismus, welches ein optisches Line Terminal (5) umfasst, das in Form einer physikalischen Ringstruktur mit mehreren Remote Nodes (15) verbunden ist, an welchen jeweils eine Mehrzahl von Netzabschlussknoten (15) angebunden sind,
(a) wobei zwischen jedem Netzabschlussknoten (3) und dem optischen Line Terminal (5) eine bidirektionale optische Signalübertragung herstellbar ist, und
(b) wobei die Verbindung zwischen dem optischen Line Terminal (5) und jedem der Remote Nodes (15) über einen ostseitigen oder westseitigen Teil einer die physikalische Ringstruktur bildenden ringförmigen bidirektionalen optischen Übertragungsstrecke erfolgt, über welchen in Downstream-Richtung vom optischen Line Terminal (5) zu den Remote Nodes (15) und in Upstream-Richtung von den Remote Nodes (15) zum optischen Line Terminal (5) jeweils ein optisches Wellenlängenmultiplexsignal übertragen wird,
(c) wobei an jedem Remote Node (15) mittels einer passiven optischen Add-/Drop-Multiplexeinheit (216, 329) ein oder mehrere, diesem Remote Node (RN1 bis RNn) zugeordnete Wellenlängenkanäle aus dem in Downstream-Richtung übertragenen Wellenlängenmultiplexsignal ausgekoppelt (Drop-Kanäle) und dem in Upstream-Richtung übertragenen Wellenlängenmultiplexsignal hinzugefügt (Add-Kanäle) werden,
**dadurch gekennzeichnet,**
(d) **dass** in den Remote Nodes (15) das Wellenlängenmultiplexsignal in Upstream-Richtung mittels einer ersten passiven optischen Splittereinheit (270) sowohl dem betreffenden ostseitigen Teil der ringförmigen optischen Übertragungsstrecke als auch dem westseitigen Teil der ringförmigen optischen Übertragungsstrecke zugeführt wird,
(e) **dass** im optischen Line Terminal (5) eine Steuereinrichtung vorgesehen ist, welche, getrennt für jeden Remote Node (15), jeweils eine optische Schaltereinheit (23) bei Detektieren eines Fehlerzustandes, der auf eine Beeinträchtigung des ostseitigen oder westseitigen Teils der ringförmigen optischen Übertragungsstrecke zwischen dem optischen Line Terminal (5) und dem betreffenden Remote Node (15) schließen lässt, so ansteuert, dass zum Senden des Wellenlängenmultiplexsignals in Downstream-Richtung und/oder zum Empfang des Wellenlängenmultiplexsignals in Upstream-Richtung auf den jeweils anderen westseitigen oder ostseitigen Teil der ringförmigen optischen Übertragungsstrecke umgeschaltet wird,
(f) **dass** in den Remote Nodes (15) das entweder auf dem ostseitigen oder dem westseitigen Teil der ringförmigen optischen Übertragungsstrecke zugeführte Wellenlängenmultiplexsignal in Downstream-Richtung mittels einer zweiten als Combiner-Einheit arbeitende passiven optischen Splittereinheit (272) einem Ausgang der Splittereinheit (272) für einen nachfolgenden Demultiplexvorgang abgegeben wird, und
(g) **dass** die erste Splittereinheit (270) das ihr zugeführte Wellenlängenmultiplexsignal in Upstream-Richtung splittet und der Add-/Drop-Multiplexeinheit (216, 329) sowohl an einem ostseitigen lokalen Sendeport (230, 334) als auch an einem westseitigen lokalen Sendeport (232, 336) zuführt und dass die zweite, als Combiner-Einheit arbeitende Splittereinheit (272) mit ihren beiden Splitting-Ports mit einem ostseitigen lokalen Empfangsport (226, 330) und einem westseitigen lokalen Empfangsport (228, 332) der Add-/Drop-Multiplexeinheit (216, 329) verbunden ist und mit ihrem Combiner-Port mit dem einer Demulitplexeinheit (39).

4. Passives optische Übertragungsnetz nach Anspruch 3, **dadurch gekennzeichnet, dass** im optischen Line Terminal (5) eine erste (200, 300) und eine zweite (202, 302) Signal-Switch-Einheit vorgesehen sind, welche jeweils mit einem Ende der ringförmigen Übertragungsstrecke verbunden sind.

5. Passives optische Übertragungsnetz nach Anspruch 4, **dadurch gekennzeichnet, dass** im optischen Line Terminal (5) für jeden Remote Node (15) eine optische Schaltereinheit (23) vorgesehen ist, wobei jede Schaltereinheit (23) zwei Umschalter aufweist, wobei dem gemeinsamen Port des ersten Umschalters das vom optischen Line Terminal (5) zum betreffenden Remote Node (15) zu sendende Wellenlängenmultiplexsignal zugeführt ist und dem gemeinsamen Port des zweiten Umschalters das vom betreffenden Remote Node (15) zum optischen Line Terminal (5) gesendete Wellenlängenmultiplexsignal und wobei die beiden Umschaltports des ersten Umschalters mit dem betreffenden lokalen Sendeport (208₁ bis 208ₙ; 210₁ bis 210ₙ; 316₁ bis 316ₙ; 318₁ bis 318ₙ) der ersten (200, 300) und der zweiten (202, 302) Signal-Switch-Einheit verbunden sind und die beiden Umschaltports des zweiten Umschalters mit dem betreffenden (212₁ bis 212ₙ; 214₁ bis 214ₙ; 312₁ bis 312ₙ; 314₁ bis 314ₙ) der ersten (200, 300) und der zweiten (202, 302) Signal-Switch-Einheit.

6. Passives optisches Übertragungsnetz nach Anspruch 3 oder 4, **dadurch gekennzeichnet, dass** die ringförmige bidirektionale optische Übertragungsstrecke jeweils zwei unidirektionale optische Pfade (390, 392) mit jeweils entgegengesetzter Übertragungsrichtung umfasst, dass die erste (200, 300) und zweite (202, 302) Signal-Switch-Einheit jeweils einen mit dem betreffenden optischen Pfad (390, 392) verbundenen remote-seitigen Empfangsport (308, 310) für das von den Remote Nodes (15) zum optischen Line Terminal (5) gesendete Wellenlängenmultiplexsignal und einen remote-seitigen Sendeport (304, 306) für das vom optischen Line Terminal (5) zu den Remote Nodes (15) zu sendende Wellenlängenmultiplexsignal aufweist und dass in jedem Remote Node (15) die Add-/Drop-Multiplexeinheit (216, 329) jeweils einen ostseitigen (322) und einen westseitigen (324) Empfangsport und einen ostseitigen (326) und westseitigen (328) Sendeport aufweist, mit welchen der betreffende Remote Node (15) jeweils in die beiden unidirektionalen optischen Pfade (390, 392) geschaltet ist.

7. Passives optische Übertragungsnetz nach einem der Ansprüche 3 bis 6, **dadurch gekennzeichnet, dass** in jedem Remote Node (15) eine Multiplexeinheit (41) vorgesehen ist, welcher die von den mit dem Remote Node (15) verbundenen Netzabschlussknoten (3) empfangenen optischen Signale zugeführt sind und welche das hieraus erzeugte Wellenlängenmultiplexsignal der ersten Splittereinheit (270) zuführt und dass in jedem Remote Node (15) eine Demultiplexeinheit (41) vorgesehen ist, welcher das von der zweiten, als Combiner-Einheit arbeitenden Splittereinheit (272) gelieferte Wellenlängenmultiplexsignal zugeführt ist und welche die gedemultiplexten optischen Signale den jeweils zugeordneten, mit dem Remote Node (15) verbundenen Netzabschlussknoten (3) zuführt.

## Claims

1. A passive optical transmission network having a protection mechanism which comprises an optical line terminal (5) that is connected to at least one remote node (15) to which a plurality of network termination nodes (3) are linked,
(a) wherein bidirectional optical signal-transmission can be established between each network termination node (3) and the optical line terminal (5),
(b) wherein the connection between the optical line terminal (5) and the at least one remote node (15) is made by way of a first bidirectional optical transmission section by way of which in each case an optical wavelength-multiplexed signal is transmitted in the downstream direction from the optical line terminal (5) to the at least one remote node (15) and in the upstream direction from the at least one remote node (RN1 to RNn) to the optical line terminal (5),
(c) wherein a second bidirectional optical transmission section is provided between the optical line terminal (5) and the at least one remote node (15), and
(d) wherein in the at least one remote node (15) the wavelength-multiplexed signal is fed in the upstream direction by means of a passive optical splitter unit (17, 170) both to the first optical transmission section and to the second optical transmission section,
**characterised in that**
(e) provided in the optical line terminal (5) there is a control unit (33) which, in the event of detection of an error state that points to impairment of the first or second optical transmission section, activates a controllable optical switch unit (23) in such a way that in order to send the wavelength-multiplexed signal in the downstream direction and/or to receive the wavelength-multiplexed signal in the upstream direction there is a switch-over to the respective other optical transmission section,
(f) the first and second optical transmission section each comprise two unidirectional optical paths (191, 192; 211, 212) with in each case opposite transmission directions for the transmission of the wavelength-multiplexed signals in the downstream direction and the upstream direction,
(g) in the at least one remote node (15) in each case the two splitting ports of a respective splitter unit (170; 172) are connected to the two optical paths (191, 211; 192, 212) for the same transmission direction, the common port of the splitter unit (172), to which the wavelength-multiplexed signal is fed in the downstream direction, is connected to a demultiplexer unit (39), and the common port of the splitter unit (170), to which the wavelength-multiplexed signal is fed in the upstream direction, is connected to a multiplexer unit (41).

2. A passive optical transmission network according to claim 1, **characterised in that** in the optical line terminal (5) in each case the switching ports (23a_{I}, 23b_{I}; 23a_{II}, 23b_{II}) of a respective change-over switch (23_{I}, 23_{II}) of the optical switch unit (23) are connected to the two optical paths (191, 211; 192, 212) for the same transmission direction, the common port of the switch (23_{II}) for the wavelength-multiplexed signal received by the optical line terminal (5) is connected to a demultiplexer unit (27), and the common port of the switch (23_{I}) for the wavelength-multiplexed signal to be sent from the optical line terminal (5) is connected to a multiplexer unit (11), and an optical amplifier unit (13) is preferably provided in the connection between the common port of the switch (23_{I}) for the wavelength-multiplexed signal, to be sent from the optical line terminal (5), and the multiplexer unit (11).

3. A passive optical transmission network having a protection mechanism which comprises an optical line terminal (5) which is connected in the form of a physical ring structure to a plurality of remote nodes (15) to which in each case a plurality of network termination nodes (15) are linked,
(a) wherein bidirectional optical signal-transmission can be established between each network termination node (3) and the optical line terminal (5), and
(b) wherein the connection between the optical line terminal (5) and each of the remote nodes (15) is made by way of an east-side or west-side portion of an annular bidirectional optical transmission section forming the physical ring structure by way of which in each case an optical wavelength-multiplexed signal is transmitted in the downstream direction from the optical line terminal (5) to the remote nodes (15) and in the upstream direction from the remote nodes (15) to the optical line terminal (5),
(c) wherein at each remote node (15) by means of a passive optical add/drop multiplexer unit (216, 329) one or more wavelength channels associated with this remote node (RN1 to RNn) is/are decoupled from the wavelength-multiplexed signal transmitted in the downstream direction (drop channels) and added to the wavelength-multiplexed signal transmitted in the upstream direction (add channels),
**characterised in that**
(d) in the remote nodes (15) the wavelength-multiplexed signal is fed in the upstream direction by means of a first passive optical splitter unit (270) both to the relevant east-side portion of the annular optical transmission section and also to the west-side portion of the annular optical transmission section,
(e) provided in the optical line terminal (5) there is a control device which, separately for each remote node (15), in each case activates an optical switch unit (23), in the event of detection of an error state that points to impairment of the east-side or west-side portion of the annular optical transmission section between the optical line terminal (5) and the relevant remote node (15), in such a way that in order to send the wavelength-multiplexed signal in the downstream direction and/or to receive the wavelength-multiplexed signal in the upstream direction there is a switch-over to the respective other west-side or east-side portion of the annular optical transmission section,
(f) in the remote nodes (15) the wavelength-multiplexed signal fed either on the east-side or the west-side portion of the annular optical transmission section is emitted in the downstream direction by means of a second passive optical splitter unit (272), operating as a combiner unit, to an output of the splitter unit (272) for a subsequent demultiplexing process, and
(g) the first splitter unit (270) splits the wavelength-multiplexed signal, fed to it, in the upstream direction and feeds it to the add/drop multiplexer unit (216, 329) both at an east-side local sending port (230, 334) and at a west-side local sending port (232, 336), and the second splitter unit (272), operating as a combiner unit, is connected with its two splitting ports to an east-side local receiving port (226, 330) and a west-side local receiving port (228, 332) of the add/drop multiplexer unit (216, 329) and with its combiner port to the one demultiplexer unit (39).

4. A passive optical transmission network according to claim 3, **characterised in that** provided in the optical line terminal (5) there is a first signal switch unit (200, 300) and a second signal switch unit (202, 302) which are each connected to an end of the annular transmission section.

5. A passive optical transmission network according to claim 4, **characterised in that** provided in the optical line terminal (5) for each remote node (15) there is an optical switch unit (23), wherein each switch unit (23) has two change-over switches, wherein the wavelength-multiplexed signal that is to be sent from the optical line terminal (5) to the relevant remote node (15) is fed to the common port of the first change-over switch, and the wavelength-multiplexed signal that is sent from the relevant remote node (15) to the optical line terminal (5) is fed to the common port of the second change-over switch, and wherein the two change-over ports of the first change-over switch are connected to the relevant local sending port (208₁ to 208ₙ; 210₁ to 210ₙ; 316₁ to 316ₙ; 318₁ to 318ₙ) of the first signal switch unit (200, 300) and the second signal switch unit (202, 302), and the two change-over ports of the second change-over switch are connected to the relevant port (212₁ to 212ₙ; 214₁ to 214ₙ; 312₁ to 312ₙ; 314₁ to 314ₙ) of the first signal switch unit (200, 300) and the second signal switch unit (202, 302).

6. A passive optical transmission network according to claim 3 or 4, **characterised in that** the annular bidirectional optical transmission section comprises in each case two unidirectional optical paths (390, 392) with in each case opposite transmission directions, the first signal switch unit (200, 300) and the second signal switch unit (202, 302) in each case have a remote-side receiving port (308, 310) connected to the relevant optical path (390, 392) for the wavelength-multiplexed signal sent from the remote nodes (15) to the optical line terminal (5) and a remote-side sending port (304, 306) for the wavelength-multiplexed signal to be sent from the optical line terminal (5) to the remote nodes (15), and in each remote node (15) the add/drop multiplexer unit (216, 329) in each case has an east-side receiving port (322) and a west-side receiving port (324) and an east-side sending port (326) and a west-side sending port (328), with which the relevant remote node (15) is switched in each case into the two unidirectional optical paths (390, 392).

7. A passive optical transmission network according to one of claims 3 to 6, **characterised in that** provided in each remote node (15) there is a multiplexer unit (41) to which the optical signals received from the network termination nodes (3) connected to the remote node (15) are fed and which feeds the wavelength-multiplexed signal generated herefrom to the first splitter unit (270), and provided in each remote node (15) there is a demultiplexer unit (41) to which the wavelength-multiplexed signal delivered from the second splitter unit (272), operating as a combiner unit, is fed and which feeds the demultiplexed optical signals to the respectively associated network termination nodes (3) connected to the remote node (15).

## Revendications

1. Réseau de transmission optique passif avec mécanisme de protection, qui comporte un terminal de ligne optique (5) qui est relié avec au moins un noeud distant (15) auquel une pluralité de noeuds de branchement de réseau (3) sont attachés,
(a) dans lequel une transmission de signaux optique bidirectionnelle peut être réalisée entre chaque noeud de branchement de réseau (3) et le terminal de ligne optique (5),
(b) dans lequel la liaison entre le terminal de ligne optique (5) et l'au moins un noeud distant (15) est effectuée par le biais d'un premier trajet de transmission optique bidirectionnel par le biais duquel un signal optique de multiplexage par répartition en longueurs d'onde est transmis respectivement dans une direction en aval du terminal de ligne optique (5) vers l'au moins un noeud distant (15) et dans une direction en amont de l'au moins un noeud distant (RN1 à RNn) vers le terminal de ligne optique (5),
(c) dans lequel un second trajet de transmission optique bidirectionnel est prévu entre le terminal de ligne optique (5) et l'au moins un noeud distant (15), et
(d) dans lequel, dans l'au moins un noeud distant (15), le signal de multiplexage par répartition en longueurs d'onde est amené en direction en amont, au moyen d'une unité de séparation optique passive (17, 170), aussi bien vers le premier trajet de transmission optique que vers le second trajet de transmission optique,
**caractérisé en ce**
(e) **que** le terminal de ligne optique (5) est pourvu d'une unité de commande (33) qui, lors de la détection d'un état d'erreur, permet de conclure à une dégradation du premier ou du second trajet de transmission optique, commande une unité de commutation optique commandable (23) de sorte que, pour l'émission du signal de multiplexage par répartition en longueurs d'onde dans la direction en aval et/pour la réception du signal de multiplexage par répartition en longueurs d'onde dans la direction en amont, a lieu une commutation sur respectivement l'autre trajet de transmission optique,
(f) **que** le premier et le second trajet de transmission optique comportent chacun deux chemins optiques unidirectionnels (191, 192 ; 211, 212) avec chacun une direction de transmission opposée pour la transmission des signaux de multiplexage par répartition en longueurs d'onde dans la direction en aval et dans la direction en amont,
(g) **que** dans l'au moins un noeud distant (15), les deux ports de séparation de chaque unité de séparation (170 ; 172) sont reliés respectivement aux deux chemins optiques (191,211 ; 192, 212) pour la même direction de transmission, que le port commun de l'unité de séparation (172), à laquelle est mené le signal de multiplexage par répartition en longueurs d'onde dans la direction en aval, est relié à une unité de démultiplexage (39) et que le port commun de l'unité de séparation (170), à laquelle est mené le signal de multiplexage par répartition en longueurs d'onde dans la direction en amont, est relié à une unité de multiplexage (41).

2. Réseau de transmission optique passif selon la revendication 1, **caractérisé en ce que** dans le terminal de ligne optique (5), les ports de commutation respectifs (23a_{I}, 23b_{I} ; 23a_{II}, 23b_{II}) d'un commutateur respectif (23_{I}, 23_{II}) de l'unité de commutation optique (23) sont reliés aux deux chemins optiques (191, 211 ; 192, 212) pour la même direction de transmission, que le port commun du commutateur (23_{II}) pour le signal de multiplexage par répartition en longueurs d'onde reçu par le terminal de ligne optique (5) est relié à une unité de démultiplexage (27) et le port commun du commutateur (23_{I}) pour le signal de multiplexage par répartition en longueurs d'onde à émettre par le terminal de ligne optique (5) est relié à une unité de multiplexage (11), et que dans la liaison entre le port commun du commutateur (23_{I}) pour le signal de multiplexage par répartition en longueurs d'onde à émettre par le terminal de ligne optique (5) et l'unité de multiplexage (11), il est prévu de préférence une unité d'amplification optique (13).

3. Réseau de transmission optique passif avec mécanisme de protection, qui comporte un terminal de ligne optique (5) qui est relié dans une forme d'une structure physique en anneau à plusieurs noeuds distants (15) auxquels respectivement une pluralité de noeuds de branchement de réseau (15) sont attachés,
(a) dans lequel une transmission de signaux optique bidirectionnelle peut être réalisée entre chaque noeud de branchement de réseau (3) et le terminal de ligne optique (5), et
(b) dans lequel la liaison entre le terminal de ligne optique (5) et chacun des noeuds distants (15) est effectuée par le biais d'une partie côté est ou côté ouest d'un trajet de transmission optique bidirectionnel en forme d'anneau formant la structure en anneau, par le biais duquel dans la direction en aval du terminal de ligne optique (5) vers les noeuds distants (15) et dans la direction en amont des noeuds distants (15) vers le terminal de ligne optique (5) est transmis respectivement un signal de multiplexage par répartition en longueurs d'onde optique,
(c) dans lequel, dans chaque noeud distant (15), au moyen d'une unité de multiplexage d'ajout-rejet optique passive (216, 329), un ou plusieurs, canaux de longueurs d'onde associé à ce noeud distant (RN1 à RNn) sont découplés (canaux rejetés) du signal de multiplexage par répartition en longueurs d'onde transmis dans la direction en aval et sont ajoutés (canaux ajoutés) au signal de multiplexage par répartition en longueurs d'onde transmis dans la direction en amont,
**caractérisé en ce**
(d) **que** dans les noeuds distants (15), le signal de multiplexage par répartition en longueurs d'onde dans la direction en amont est amené, au moyen d'une première unité de séparation optique passive (270), aussi bien à la partie côté est concernée du trajet de transmission optique en forme d'anneau qu'à la partie côté ouest du trajet de transmission optique en forme d'anneau,
(e) **que** le terminal de ligne optique (5) est pourvu d'un système de commande qui, séparément de chaque noeud distant (15), commande chaque fois une unité de commutation optique (23) lors de la détection d'un état d'erreur, qui permet de conclure à une dégradation de la partie côté est ou côté ouest du trajet de transmission optique en forme d'anneau entre le terminal de ligne optique (5) et le noeud distant concerné (15), de sorte que, pour l'émission du signal de multiplexage par répartition en longueurs d'onde dans la direction en aval et/ou pour la réception du signal de multiplexage par répartition en longueurs d'onde dans la direction en amont, a lieu respectivement une commutation sur l'autre partie côté est ou côté ouest du trajet de transmission optique en forme d'anneau,
(f) **que** dans les noeuds distants (15), le signal de multiplexage par répartition en longueurs d'onde, amené soit sur la partie côté est, soit sur la partie côté ouest du trajet de transmission optique en forme d'anneau, est délivré dans la direction en aval, au moyen d'une seconde unité de séparation optique passive (272) fonctionnant en tant qu'unité de combinaison, à une sortie de l'unité de séparation (272) pour une opération de démultiplexage subséquente, et
(g) **que** la première unité de séparation optique passive (270) sépare le signal de multiplexage par répartition en longueurs d'onde amené à elle dans la direction en amont et l'amène à l'unité de multiplexage d'ajout-rejet (216, 329) aussi bien au niveau d'un port d'émission local côté est (230, 334) qu'au niveau d'un port d'émission local côté ouest (232, 336) et que la seconde unité de séparation (272), fonctionnant en tant qu'unité de combinaison, est reliée par ses deux ports de séparation à un port de réception local côté est (226, 330) et à un port de réception local côté ouest (228, 332) de l'unité de multiplexage d'ajout-rejet (216, 329) et par son port de combinaison à une unité de démultiplexage (39).

4. Réseau de transmission optique passif selon la revendication 3, **caractérisé en ce que** le terminal de ligne optique (5) est pourvu d'une première (200, 300) et d'une seconde (202, 302) unité de commutation de signaux qui sont reliées chacune à une extrémité du trajet de transmission en forme d'anneau.

5. Réseau de transmission optique passif selon la revendication 4, **caractérisé en ce qu'**est prévue, dans le terminal de ligne optique (5) pour chaque noeud distant (15), une unité de commutation optique (23), chaque unité de commutation (23) comprenant deux commutateurs, dans lequel le signal de multiplexage par répartition en longueurs d'onde à émettre par le terminal de ligne optique (5) vers le noeud distant concerné (15) est amené au port commun du premier commutateur et le signal de multiplexage par répartition en longueurs d'onde émis par le noeud distant concerné (15) vers le terminal de ligne optique (5) est amené au port commun du second commutateur, les deux ports de commutation du premier commutateur étant reliés au port d'émission local concerné (208₁ à 208ₙ ; 210₁ à 210ₙ ; 316₁ à 316ₙ ; 318₁ à 318ₙ) de la première (200, 300) et de la seconde (202, 302) unité de commutation de signaux et les deux ports de commutation du second commutateur étant reliés au port de réception local concerné (212₁ à 212ₙ ; 214₁ à 214ₙ ; 312₁ à 312ₙ ; 314₁ à 314ₙ) de la première (200, 300) et de la seconde (202, 302) unité de commutation de signaux.

6. Réseau de transmission optique passif selon la revendication 3 ou 4, **caractérisé en ce que** le trajet de transmission optique bidirectionnel en forme d'anneau comporte respectivement deux chemins optiques unidirectionnels (390, 392) d'une direction de transmission respectivement opposée,
**que** la première (200, 300) et la seconde (202, 302) unité de commutation de signaux comprennent chacune un port de réception côté distant (308, 310) relié au chemin optique concerné (390, 392) pour le signal de multiplexage par répartition en longueurs d'onde émis par les noeuds distants (15) vers le terminal de ligne optique (5) et un port d'émission côté distant (304, 306) pour le signal de multiplexage par répartition en longueurs d'onde à émettre par le terminal de ligne optique (5) vers les noeuds distants (15),
et que dans chaque noeud distant (15), l'unité de multiplexage d'ajout-rejet (216, 329) comprend respectivement un port de réception côté est (322) et un port de réception côté ouest (324) et un port d'émission côté est (326) et un port d'émission côté ouest (328) avec lesquels le noeud distant concerné (15) est commuté respectivement dans les deux chemins optiques bidirectionnels (390, 392).

7. Réseau de transmission optique passif selon l'une quelconque des revendications 3 à 6, **caractérisé en ce qu'**est prévue dans chaque noeud distant (15) une unité de multiplexage (41) à laquelle sont amenés les signaux optiques reçus par le noeud de branchement de réseau (3) relié au noeud distant (15) et qui amène le signal de multiplexage par répartition en longueurs d'onde généré d'après ceux-ci à la première unité de séparation optique passive (270) et qu'est prévue dans chaque noeud distant (15) une unité de démultiplexage (41) à laquelle est amené le signal de multiplexage par répartition en longueurs d'onde délivré par la seconde unité de séparation (272) fonctionnant en tant qu'unité de combinaison et qui amène les signaux optiques démultiplexés aux noeuds de branchement de réseau (3) respectivement associés reliés au noeud distant (15).
